# EUROPEAN PATENT APPLICATION

(11) **EP 4 254 253 A1**
(43) Date of publication of application: **04.10.2023**
(21) Application number: 22165479.1
(22) Date of filing: 30.03.2022
(51) Int. Cl.: G06F 30/27, G06F 30/17, G06F 111/20

(54) **METHOD FOR GENERATING A STRUCTURE OF AN OBJECT**

(71) Applicant: Henkel AG & Co. KGaA, 40589 Düsseldorf (DE)
(72) Inventor: Rai, Rohit, 228159 Uttar Pradesh (IN); Verma, Pradeep Kumar, 122001 Gurgaon (IN); Abas, Raoul, 40235 Düsseldorf (DE); Sankar, Sarath, 122505 Gurgaon (IN); Baruah, Abhijit, 201309 Noida (IN)

(57) **Abstract**

The invention provides a method for generating a structure of an object with a CAD system that meets a target physical parameter value. First a target physical parameter value is set. A model trained using machine learning on a dataset comprising data corresponding to structures of objects having known structural and physical parameter values is obtained, the model establishing relations between the structural parameter values and the physical parameter values. Based on that model and the target parameter value, a generated structure of the object is constructed.

## Description

### TECHNICAL FIELD

The invention relates to the field of computer modeling of structures, in particular two-dimensional or three-dimensional structures for example using a computer aided designing (CAD) system. The invention more particularly provides a method for generating or suggesting designs based on target physical properties of the structure of an object input by a user.

### TECHNOLOGICAL BACKGROUND

The production of items in an industrial environment, in particular the design of new objects that meet some specific structural or physical requirements relies intensively on an initial simulation stage that can be performed using tools such as computer aided design (also known as CAD) systems and less on the construction of prototypes. The cost (in terms of money and time) of building prototypes and testing their mechanical response to constraints can be greatly reduced by postponing this phase to the very end of the conception of new structures of objects.

All types of industries are concerned by this higher reliability on simulations for prototyping and conceiving new designs for structures of objects fulfilling a given function. The design of new car structures, aircrafts or even containers all undergo some initial numerical development phase using CAD systems. The conception of new structures therefore goes through an initial phase of building a digital twin of the structure to save costs and avoid constructing too many prototypes for the final real life test phase.

Despite the many advantages provided by this step of performing tests on a digital twin of the structures of objects, human designing of the initial structure of the object is still required, even for objects that could benefit from minor changes to existing designs.

For example, when a user wishes to construct a new car body that has a specific wind resistance, specific maximum noise, vibration and harshness parameters (also referred to as NVH), that user first starts with a raw template of a generic body of a car and manually makes some design changes to that template according to the technical expertise of the user on how structures behave under mechanical constraints. Once a suitable design is achieved an evaluation phase is started, for example using finite element analysis on a numerical version of that generated design. Based on the results of the evaluation phase, that user will manually reinforce some parts of the body or remove some parts to better meet the desired physical parameters values for the car body.

This manual initial phase is still time-consuming and a method is sought to reduce the burden of manually building such structures.

For the above reasons, a method that can reduce the time spent constructing the structure of an object having desired physical parameter values is sought.

### SUMMARY OF THE INVENTION

To address the above need, the invention provides a method implemented by a processor for generating a structure of an object with a computer aided design system wherein the generated structure of the object fulfills one or more target physical parameter values, the method comprising:
- Obtaining a set comprising at least one target physical parameter value for the structure of the object;
- Obtaining a model trained using machine learning on a dataset comprising data corresponding to numerical descriptions of a plurality of structures of objects having known structural parameter values and physical parameter values, the model establishing relations between the structural parameter values of the structures of the objects and the physical parameter values of the structures of the objects;
- Constructing, based on the set comprising at least one target parameter value and using the model, at least one generated structure of the object that fulfills the target physical parameter values.

The invention more particularly reduces to a minimum the need to have a manual input from a user when creating the design of a new structure that is expected to fulfill certain target physical parameter values. Instead of creating an initial design manually, a user can input the target parameter values for example into a CAD system that can then activate a model trained using artificial intelligence based on previous CAD designs of similar structures.

One aspect of the invention that enables this reduction of manual design construction resides in the use of a model that is trained from past CAD structures of objects having known physical parameter values. The model works for example by analyzing a plurality of data inputs from CAD documents of different structures to identify relations between structural elements of the objects and physical parameter values. Such relations can for example associate physical parameters such as tortional stiffness, bending stiffness, lateral stiffness, dynamic stiffness, free-free stiffness, maximum deformation during impact, resistance force during static impact, resistance force during dynamic impact, maximum tolerated temperature, mass of the object, Eigenfrequency of the object to the shape of the object, its thickness, its topology. The model can in particular read CAD files to associate specific structural elements in numerical form to a corresponding physical parameter.

Alternatively or additionally, as a further improvement to the model, it is possible to generate datasets that comprise relations between structural elements and physical parameter values known from literature or from other sources than the CAD system.

Input of these datasets can for example provide generic relations between material compositions or certain shapes and their effect on physical properties such as stiffness, rigidity, ductility, resistance to different environmental conditions such as applied force, temperature, electrical conductivity, heat capacitance for example.

The relation between the structure of an object and a physical parameter value can already be formulated as mathematical equations relating for example the thickness of a structure to its rigidity or torsional stiffness.

It is also possible, based on general knowledge about material sciences to generate from such equations generic structures in a CAD program to create datasets usable to train the model to recreate relations between structural elements and their associated physical parameter values.

It is also possible to feed the database with past CAD files for which simulations or real-life measurements have been conducted to determine the physical parameter values of the structure as a whole.

One advantage of the method of the invention relies in particular in the fact that known literature and human skill is not capable of identifying certain relations between structural parameter values and physical parameter values. Complex structures made of a plurality of basic structural elements sometimes respond in unexpected ways that are hard to predict when applying knowledge that is inferred from the response of basic structural elements. The method of the invention is better at predicting the behavior of more complex structures resulting from an association of basic structural elements, and therefore also capable to construct templates for structures of objects based on input target physical parameter values. According to the invention, it is possible that more than one structure of an object is generated when more than one structure can fulfill the target physical parameters values.

The term "parameter value" encompasses both numbers provided for the value, qualitative descriptors (such as names, or general indications regarding size, thickness or degrees such as high low, medium for example), and value ranges.

According to an embodiment, obtaining the set may further comprise:
- Obtaining at least one target structural parameter value for the structure of the object;
- Constructing the at least one generated structure of the object based on the at least one target physical parameter value, the at least one target structural parameter value and using the model.

To further improve the relevance of the structure that is generated a user can input some indication of fixed parameters desired for that generated structure. For example, the indication of at least one target structural parameter value can be a qualitative indication such as: body of a car, rim of a wheel, wing of an airplane, table etc. It can also be a quantitative limitation, for example on the number of elements it may comprise such as: four wheels, three openings, at least six planes. The quantitative information can also be in the form of numerical values limiting some parameters such as a maximum size, a maximum width, a ratio of length versus width.

The method may also comprise different models wherein each model is adapted for specific types of objects that can be indicated by a qualitative or quantitative input in the form of target structural parameter values.

According to an embodiment the target physical parameter values may comprise at least one among: maximum tolerated noise, maximum tolerated vibration, maximum tolerated harshness, tortional stiffness, bending stiffness, lateral stiffness, dynamic stiffness, free-free stiffness, maximum deformation during impact, resistance force during static impact, resistance force during dynamic impact, maximum tolerated temperature, mass of the object, Eigenfrequency of the object.

In CAD systems and in particular in the automotive industry, maximum tolerated noise, vibration and harshness is also generally referred to as NVH. Terms mention in the above list can further be referred to as encompassing the mechanical response of the structure to applied stress or strain, the frequency response of the structure. Other physical properties of the object can also be defined, that may relate to the intrinsic physical properties of the object such as for example its curing or setting temperature in the case of an adhesive, Young's modulus, heat capacitance, heat conductivity, deformation energy, values indicative of the elasticity and ductility of the structure.

According to an embodiment, the method may further comprise:
- manufacturing an object based on the constructed at least one generated structure of the object.

According to an embodiment, the method may further comprise:
- comparing the at least one generated structure of the object with structures of objects in the dataset;
- assigning the at least one generated structure a similarity index based on the comparison.

The use of a similarity index can be an indication of how original a generated structure is compared to existing and known designs. It may also reflect the reliability of the generated structure since generated structures that differ too much from all past structures encountered and found in the dataset might have unexpected mechanical responses when a prototype of the generated structure is tested.

According to an embodiment, the method may further comprise:
- Subjecting the generated structure of the object to an evaluation test in which the response of the structure to environmental conditions and/or stress conditions is assessed in the form of evaluated physical parameter values;
- Comparing the assessed response to the at least one target physical parameter value; Upon determining that at least one evaluated physical parameter value differs from a corresponding target physical parameter value by more than a predetermined amount:
- Fixing a target structural parameter value for the structure of the object;
- Implementing a construction of a new generated structure of the object that fulfills the at least one target physical parameter value based on the set comprising the at least one target parameter value and using the model.

Once a structure of an object is generated, an evaluation phase, for example using finite element analysis or by building a prototype of the generated structure and subjecting it to real-life tests can be implemented. In the event that the generated structure does not fulfill all the desired criteria, an additional constraint can be added in the form of an additional fixed target structural parameter value before implementing the method of the invention once again.

According to an embodiment, the method may further comprise:
- Subjecting the generated structure of the object to an evaluation test in which the response of the structure to environmental conditions and/or stress conditions is assessed in the form of evaluated physical parameter values;
- Comparing the assessed response to the target physical parameter values;

Upon determining that at least one evaluated physical parameter value differs from a corresponding target physical parameter value by more than a predetermined amount:
- Selecting from among the constructed at least one generated structure another generated structure of the object;
- Subjecting the selected generated structure to the evaluation test.

Since the method can generate more than one generated structure of an object, should one of these structures not fulfill all desired target physical parameter values it is possible to select one of the other generated structures of the object. The method may also rank the generated structures of an object based on how close on average the predicted physical parameter values are to the target physical parameter values.

The term "predetermined amount" may typically refer to a relative difference of more than 5% or more than 10% or more than 25%.

According to an embodiment, the method may further comprise:
- obtaining at least one fixed target structural parameter value for the structure of the object;
- constructing, based on the set of target parameter values, the fixed target structure parameter value and using the model, at least one generated structure of the object that fulfills the at least one target physical parameter value.

It is in particular possible that the method of the invention is applied to an initial template provided by a user or selected from a selection of templates that define a list of such fixed target structural parameter values. The generated structure of an object amounts then to an optimization of the existing template by removing parts thereof or adding parts thereto or change the properties of existing parts thereof to reach the desired target physical parameter values.

According to an embodiment, the model may further comprise:
- identifying, for each numerical description of the structure of an object, basic structural elements within the structure of the object;
- determining, using machine learning, a relation between structural parameter values of basic structures and the physical parameter values of the structures.

According to an embodiment, basic structural elements may be at least one among:
- a segment;
- a plane;
- a curve
- a surface;
- an arch;
- a circle;
- a disk;
- a point;
- a sphere;
- a ball;
- a spline;
- a profile.

The "basic structural elements" are understood as being building blocks that can be assembled together to form more complex structures. In a CAD system, complex objects can be decomposed as the combination of several such "basic structural elements" arranged together at certain coordinates, comprising mechanical connections between them that can all be associated with certain physical parameter values.

According to an embodiment, the model may further comprise:
- identifying, for each numerical description of the structure of an object, interactions between basic structural elements within the structure of the object;
- determining, using machine learning, a relation between an arrangement of basic structures and the physical parameter values of the structures.

According to an embodiment, the structures the numerical description of which are part of the dataset differ by at least one among: size, shape, topology, volume, mass, material composition, thickness, number of basic structural elements, values of physical parameters.

It is advantageous to use a dataset that comprises different basic structural elements alongside more complex combinations of basic structural elements. A machine learning algorithm is then capable of identifying the effect of certain combinations of basic structural elements or changes in basic structural elements on the resulting physical parameter values of the generated structure of an object. Values of physical parameters mentioned above may for example comprise Young's modulus, yield strength, a stress-strain curve, values indicative of the failure of the criteria such as the elastic limit of the structure for example.

According to an embodiment, the method may further comprise:
- obtaining additional data corresponding to additional numerical descriptions of structures of objects having known structural parameter values and physical parameter values;
- updating the model using the additional data.

The invention further pertains to a computer program product comprising instructions for executing a method for generating a structure of an object with a computer aided design system wherein the generated structure of the object fulfills one or more target physical parameter values, the method comprising:
- Obtaining a set comprising at least one target physical parameter value for the structure of the object;
- Obtaining a model trained using machine learning on a dataset comprising data corresponding to numerical descriptions of a plurality of structures of objects having known structural parameter values and physical parameter values, the model establishing relations between the structural parameter values of the structures of the objects and the physical parameter values of the structures of the objects;
- Constructing, based on the set comprising at least one target parameter value and using the model, at least one generated structure of the object that fulfills the target physical parameter values.

In other words, the invention further pertains to a computer program product comprising instructions for implementing the method as described above.

The above computer program product can also be viewed as a non-transitory computer readable storage medium having stored thereon a computer program comprising instructions for execution of the method described above.

### BRIEF DESRIPTION OF THE DRAWINGS

The present disclosure will hereinafter be described in conjunction with the following drawing figures, wherein like numerals denote like elements, and:
Fig. 1 is a flowchart showing steps of a method according to an exemplary embodiment;
Fig. 2 is a schematic representation of a dataset used as training material by a machine learning algorithm to obtain a model associating structural parameter values to physical parameter values according to an exemplary embodiment;
Fig. 3 is a schematic representation of a structure of an object as represented by a CAD system and a comparison between a predicted corner for a junction of two pieces as optimized using the method of the invention, a corner obtained by a mere juxtaposition of two pieces and a corner obtained by applying optimization tools of the prior art;
Fig. 4 is a schematic representation of the structure of the object of figure 3, further showing connectors the position of which is determined using the method of the invention.

### DETAILED DESCRIPTION

The invention pertains to a method for constructing or generating a structure of an object with a computer aided design system that reduces the need for manual conception of the structure of the object, thereby increasing the efficiency and speed with which new structures are created. The method of the invention is implemented by a processor, such as a computer, a server, any user interface allowing the use of a program coding instructions of the method. The method further enables the construction of structures of objects that comprise fewer flaws than those made manually by a user based on the user's personal subjective experience of structure designs.

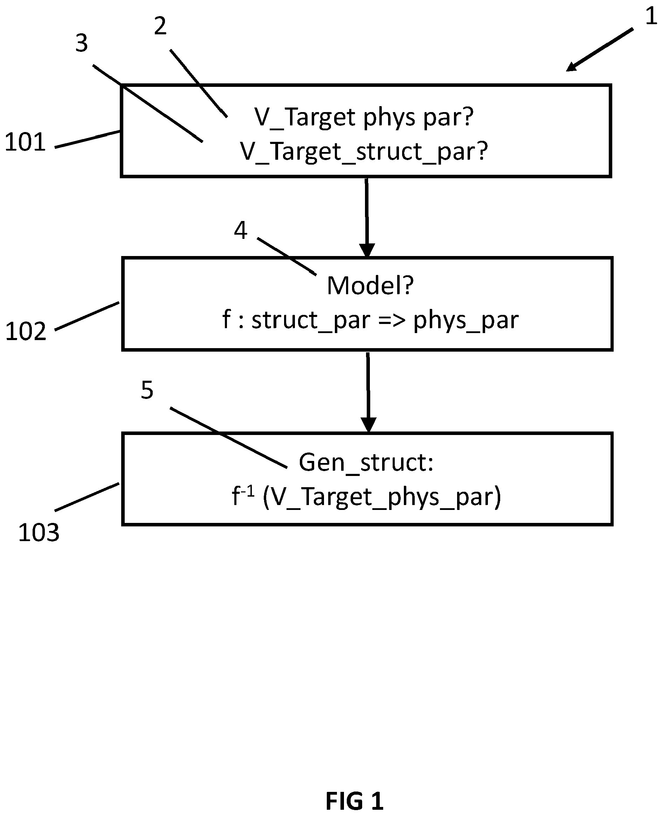

Steps of the method of the invention are shown on the flowchart of figure 1. The method 1 comprises a step of obtaining 101 a set comprising at least one target physical parameter value 2. Optionally the set may further comprise at least one target structural parameter value 3.

The target physical parameter value 2 is typically either an intrinsic property of the object, related for example to its composition, or a parameter that is representative of the mechanical response of the object to external constraints, for example of the type applied when testing the response of the object. Examples of physical parameters may typically include: maximum tolerated noise, maximum tolerated vibration, maximum tolerated harshness, tortional stiffness, bending stiffness, lateral stiffness, dynamic stiffness, free-free stiffness, maximum deformation during impact, resistance force during static impact, resistance force during dynamic impact, maximum tolerated temperature, mass of the object, Eigenfrequency of the object. The above terms are typically used by engineers to designate properties of structures as observed after applying mechanical constraints to them. Conditions in which constraints are applied to objects generally follow standards defined in evaluation tests. Advantageously, CAD files comprise information relating to the results of such tests that can be available in particular to train a model as will be discussed below.

Parameters such as Young's modulus, the maximum tolerated temperature, setting temperature, curing temperature, heat capacitance, heat conductivity, electrical resistance qualify as intrinsic properties of the structure of the object (but are still referred to in the invention as physical parameters), and can be related to its material composition, its volume but also to its design. Other physical parameters are more closely dependent on the topology of the structure and reflect parameters representative of the response of the object to external mechanical constraints.

The target structural parameter value 3 is not a required input. However, it is recommended at least to provide some initial indication of the general template that should be used for constructing a new structure of an object. For example, such an indication can be qualitative and mention the type of object that is desired such as the body of a car, a wing, a table, a seat. A target structural parameter value 3 may also be a fixed topological feature. Examples of structural parameter values can for example comprise: size, shape, topology, volume, mass, material composition, thickness, number of basic structural elements. The material composition can for example include a material type or a ratio of different materials which can form a compound. Some of these additives or compositions can be formed of adhesives.

After obtaining these target parameter values, the method 1 proceeds by obtaining 102 a model 4 that is trained on a dataset comprising data corresponding to numerical descriptions of a plurality of structures of objects having known structural parameter values and physical parameter values. This model 4 is for example generated by reading many different CAD files corresponding to structures of objects in numerical form that differ by their structural and physical parameter values. An artificial intelligence such as a machine learning algorithm can be used to establish relations between the structural parameter values of the structures and corresponding physical parameter values. Some of these relations can be further input into the dataset or into an algorithm that generates the model 4 using the training material (also referred to as dataset) by providing it with general knowledge with respect to physical laws governing the relation between the topology of an object and its physical parameters, in particular its mechanical response. However, the mere use of this generic knowledge does not provide the additional advantage provided by a model 4 that is trained on a plurality of simple and complex structures. This training of a model 4 leads to a more precise and complete description of the relations between structural parameters of an object and its physical parameters.

On the basis of the obtained target physical parameter values 2 and using the model 4, the method 1 of the invention can then find at least one structure that fulfills the desired target physical parameter values 2 and construct 103 a generated structure 5 of an object. There is likely more than one suitable structure that fulfills the physical parameter values 2 input by the user. In that case, the method 1 may generate more than one structure and recommend them according to a ranking order, for example from the most suitable (the one that has the less deviations from the input target physical parameter values 2) to the less suitable (the ones that are within a tolerable range of values but might be regarded as less conventional by their structure or frequency of occurrence in the dataset based on similarity comparison such as the number of basic structural features in common). The "conventional" character of a generated structure 5 might be based on structural proximity to structures available in the dataset used to train the model 4 or on past CAD files in general. The method 1 of the invention is however also capable of designing structures that have no exact equivalent among past recordings of CAD files.

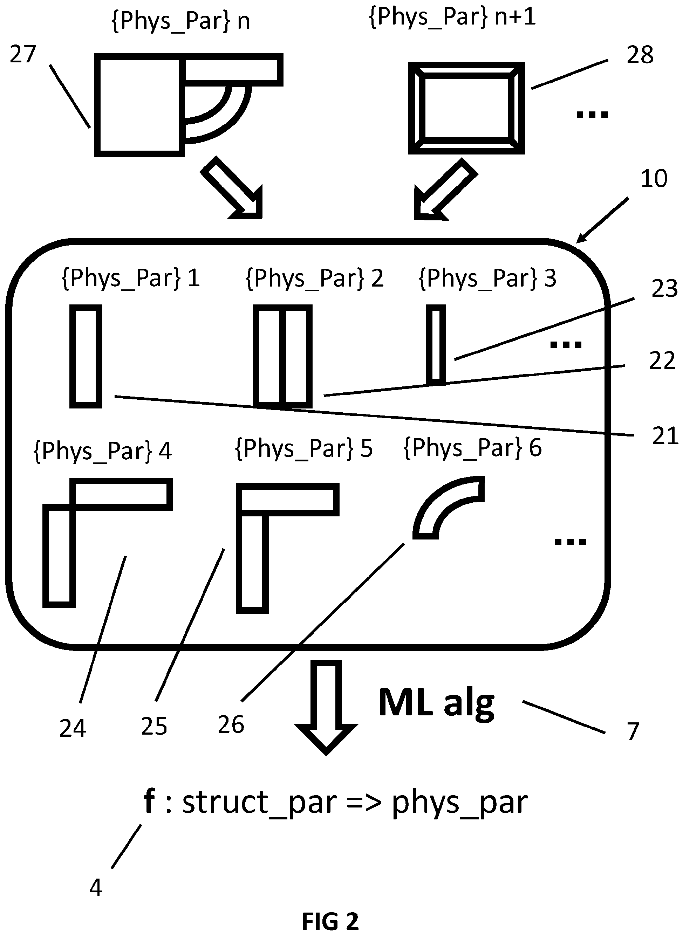

The schematic diagram of figure 2 provides some visual examples of basic structural elements and more complex structural elements that can be part of the dataset 10. In this dataset 10, each structure 21-28 can be defined by values representative of the structural parameters of the object, as well as by the associated physical parameter values of that structure. These physical parameter values are schematically illustrated on figure 2 by the labels {Phys_par}1-{Phys_par}6, {Phys_par}n, {Phys_par}n+1. As can be seen on figure 2, the dataset 10 advantageously comprises basic structural elements 21, 23, 26 as well as more complex structural elements 22, 24, 25, 27, 28 that can be decomposed into several basic structural elements 21, 23, 26. The dataset 10 can also be regularly updated with additional structures 27, 28, so that the model 4 that is used to construct generated structures 5 of objects can be regularly improved.

Indeed, to create the model 4 and establish the relations between structural parameters values and physical parameter values a machine learning algorithm 7 is applied to the dataset 10. This algorithm processes CAD files as a chain of characters, for example in text from, such as in ASCII format to find the different relations existing in the lines of code of the CAD file in order to extract therefrom the structural parameters of the object described numerically in the CAD file.

The example provided below is an exemplary extract from such an ASCII file:

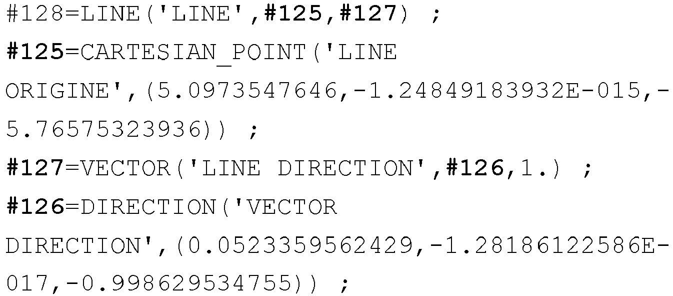

### Extract from a CAD file in text format

The sections highlighted in bold characters link different elements together so that the algorithm can translate the ASCII file into geometrical information regarding the topology of the structure as well as its coordinates, and coordinates of elements comprised therein. The algorithm is also capable of identifying interactions between basic structural elements 21, 23, 26.

Among the basic structural elements 21, 23, 26 that can be identified in an object or found in a dataset 10, one can for example find geometrical structures such as: a segment, a plane, a curve, a line, a surface, an arch, a circle, a disk, a sphere, a ball. The basic structural elements may also be referred to not from the standpoint of their geometrical definition but from a functional point of view and comprise for example: a point, spline, a profile, an enclosed volume, an edge. A point can for example be a special structure within a plane or profile that has characteristics differing from those of the rest of the surrounding structure. This can for example be a place where a bolt, a bump, an extrusion, a button or soldered element is present. The above are non-limitative examples and any type of structure commonly found in CAD files is usable to train a model 4 as mentioned above.

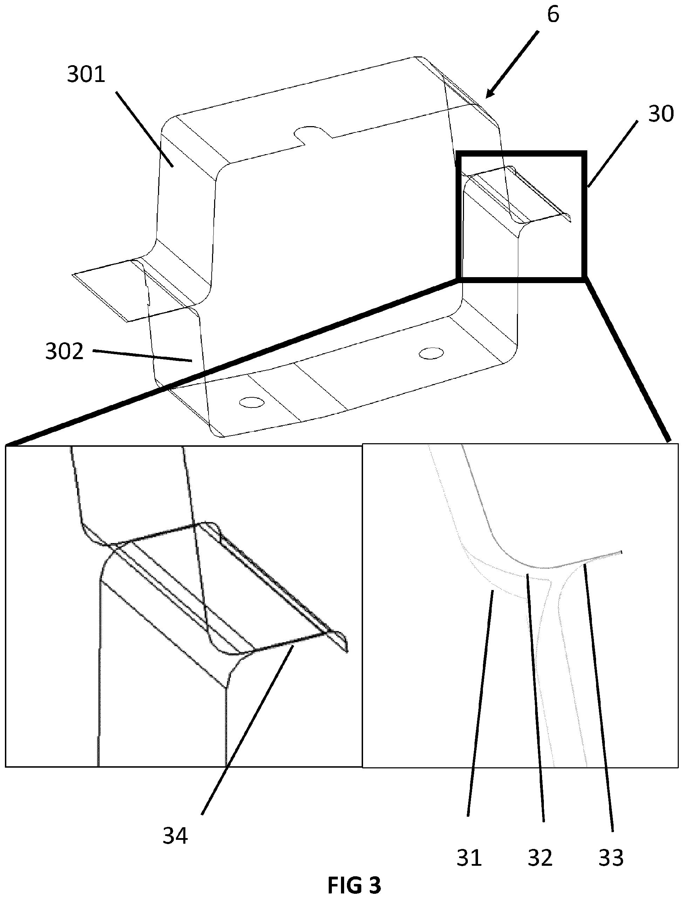

Figure 3 provides one example in which the method 1 of the invention is used to design a corner sealing element 34 between two curved structures 301, 302 of an object 6. The method 1 can also be applied to generate a structure of the object 6 from the beginning, instead of solving the problem of finding only the design of the corner sealing element 34. In the example of figure 3, caption 30 shows an enlarged view of the corner sealing element 34. The torsional stiffness, bending stiffness, lateral stiffness, free free stiffness and dynamic stiffness can all be parameterized as desired physical parameter values 2 as input of a program that implements the method 1 of the invention. Due to the model 4 being trained on a multitude of past CAD files that also comprise similar corner sealing elements 34, the model 4 is capable of associating structural parameter values to corresponding physical parameter values for corner sealing elements 34 in general. In the example of figure 3, the bottom right lines 31, 32, 33 show three different side views of possible corner sealing elements 34. Line 33 shows the design that results from a mere juxtaposition of two curved elements 301 and 302. Line 31 shows the design that could be suggested by an automatic merger of both elements using predictive tools currently available in CAD systems. Line 32 shows the design obtained when applying the method 1 of the invention based on the model 4 described above. It can be seen that line 32 is not as smooth as line 31. Line 31 does not offer the same mechanical resistance to torsional and lateral constraints and does not optimize the resistance to external mechanical constraints as opposed to line 32.

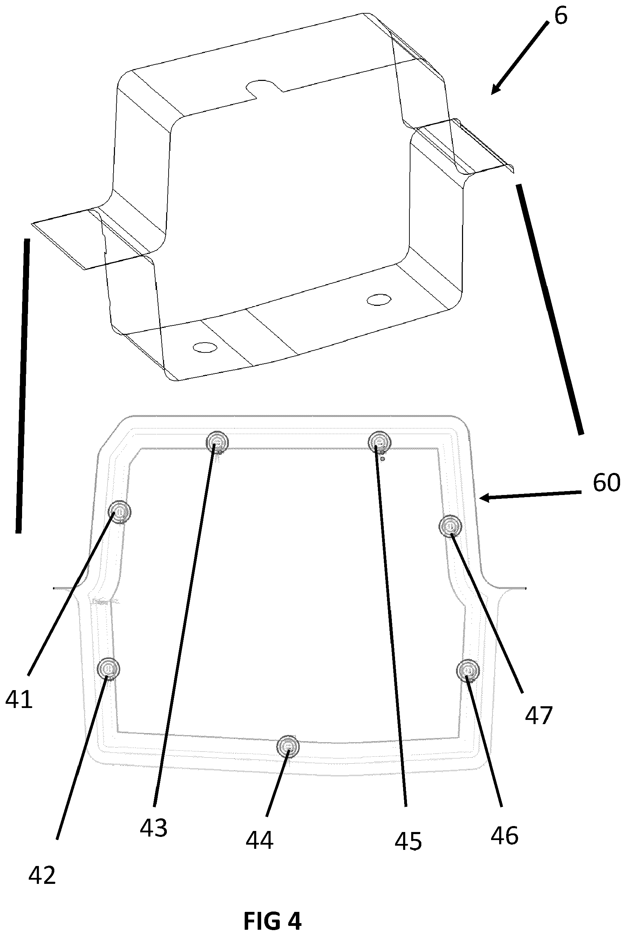

Figure 4 shows another example in which the method 1 described above may be used to find positions to create connection elements within the object 6 of figure 3. The side view of object 6 shows positions 41-47 that are determined by the method 1 of the invention as being particularly suitable for fixing connection elements at positions that are deemed to be most suitable based on the structural parameter values of object 6. The shape, nature and size of connection elements (such as for example bumps, knobs, voids, pads) is determined by the model 4.

In order to validate a generated structure 5 of an object, the method 1 of the invention may further comprise an evaluation phase. This evaluation phase can be conducted in a numerical form using for example finite element analysis tools or on a built prototype of the generated structure 5 to which mechanical and environmental constraints are applied to measure the mechanical response of the structure.

The evaluation phase can consist in standard tests performed in design engineering or comprise specific tests developed to check that the generated structure 5 respects all values or value ranges of the target physical parameter values 2.

The evaluation test can apply constraints at specific locations of the generated structure 5 to check the mechanical response of the generated structure 5 to torsional stress, bending, impact stress. Temperature can also be modified to see if a resulting mechanical deformation compromises the integrity of the structure.

Should the evaluation phase show that the generated structure 5 does not fully comply with the expected target physical parameter values 2, the method 1 of the invention may be applied again using the same target physical parameter values 2 as input but by fixing and/or modifying some target structural parameter values 3. If the model 4 constructed more than one generated structure 5 during the first implementation of the method 1, then another generated structure 5 can be subjected to the evaluation phase.

The method 1 of the invention can for example be used to design three-dimensional or two-dimensional CAD models, create mesh model (inserts), perform optimization of existing templates of structures (topology/shape optimization). There is no limitation to the type of structure that can be constructed, and can include for example structural inserts, NVH baffles, tapes or pads. It can also be used in combination with manufacturing devices such as 3D printers or automatic production facilities once a structure fulfilling target physical parameter values 2 is constructed.

The method 1 can form the basis for further predictions of defects or performance weaknesses of structures, for example by providing an indication relative to the similarity of the constructed generated structure 5 to past structures stored for example in the database. For that, the method 1 of the invention may further comprise a step of comparing a generated structure 5 to structures available in the dataset to indicate how close it is to past structures of known physical parameters values 2. This can provide some indication to a user as to the reliability of the design that is provided by the method 1 of the invention. The method 1 may also use such a similarity index to rank generated structures and preferably suggest generated structures 5 that have a higher similarity index to known past structures. A user can also select the desired generated structure 5 among those constructed by the method 1. A lower similarity index might typically be indicative of a more creative design.

The model 4 used in the method 1 of the invention is obtained by applying a machine learning algorithm to data from the dataset 10. The artificial intelligence involved proceeds as a supervised machine learning. The model 4 is used to construct a generated structure 5 of the object. This can for example involve the model 4 determining the position and type of basic structural elements 21, 23, 26 arranged together to form a more complex structure. This combination of elements can involve automation scripts that are built into a CAD system. They can further comprise some simulation capabilities based for example on finite element analysis. User feedback can also be gathered to update the model 4 by rejecting for example designs that are deemed to be incompatible with the expectations of a user for the type of target structural parameter values 3 and target physical parameter values 2 that were provided.

The method 1 of the invention can further include a tool that provides a protocol to be followed to manufacture the generated structure 5 of the object. Such a protocol can for example comprise a step-by-step description of how to assemble different elements together to produce the object having the desired generated structure 5.

In order to generate such a protocol, the model 4 may be obtained by data in the dataset 10 that comprise not only structural parameter values and associated physical parameter values but further also manufacturing data about how each structure of an object is manufactured.

The method 1 of the invention is implemented by a processor in a computer or server for example. A typical system implementing the method 1 may for example comprise a data processing engine, that can receive inputs from a user that defines the target physical parameter values 2 and target structural parameter values 3. The data processing engine also receives the model 4 so that the generated structure 5 can be constructed based on both the model 4 and the target parameters. The data processing engine then instructs the CAD system to perform operations in order to construct the generated structure 5.

In addition to the data processing engine a system further comprises a machine learning tool that generates the model 4 and updates it regularly. The machine learning tool is configured to read historical design data from CAD files and create the model 4 that is then sent to the data processing engine.

One effect of the method 1 of the invention is to reduce the conception phase when constructing a new structure from about 20 days to less than 5 days.

The steps of the examples and embodiments described above can be implemented by a processor such as a processor in a computer, or a computer itself. A computer program product comprising steps of the above-described method 1 can be used to implement the method 1 on a computer.

It is possible to store a computer program comprising instructions to implement the method of the invention on different non-transitory computer readable storage mediums. These could for example comprise a processor or chip, FPGA (field programable gate array), an electronic circuit comprising several processors or chips, a hard drive, a flash or SD card, a USB stick, a CD-ROM or DVD-ROM or Blue-Ray disc, or a diskette.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the various embodiments in any way. Rather, the foregoing detailed description will provide those skilled in the art with a convenient road map for implementing an exemplary embodiment as contemplated herein. It being understood that various changes may be made in the function and arrangement of elements described in an exemplary embodiment without departing from the scope of the various embodiments as set forth in the appended claims.

## Claims

1. A method (1) implemented by a processor for generating a structure (6, 60) of an object with a computer aided design system wherein the generated structure of the object fulfills one or more target physical parameter values (2), the method comprising:
- Obtaining (101) a set comprising at least one target physical parameter value for the structure of the object;
- Obtaining (102) a model (4) trained using machine learning on a dataset (10) comprising data corresponding to numerical descriptions of a plurality of structures of objects having known structural parameter values and physical parameter values, the model establishing relations between the structural parameter values of the structures of the objects and the physical parameter values of the structures of the objects;
- Constructing (103), based on the set comprising at least one target parameter value and using the model, at least one generated structure of the object that fulfills the target physical parameter values.

2. The method according to claim 1, wherein obtaining the set further comprises:
- Obtaining at least one target structural parameter value (3) for the structure of the object;
- Constructing the at least one generated structure of the object based on the at least one target physical parameter value, the at least one target structural parameter value and using the model.

3. The method according to any one of the preceding claims, wherein the target physical parameter values comprise at least one among: maximum tolerated noise, maximum tolerated vibration, maximum tolerated harshness, tortional stiffness, bending stiffness, lateral stiffness, dynamic stiffness, free-free stiffness, maximum deformation during impact, resistance force during static impact, resistance force during dynamic impact, maximum tolerated temperature, mass of the object, Eigenfrequency of the object.

4. The method according to any one of the preceding claims, further comprising:
- manufacturing an object based on the constructed at least one generated structure of the object.

5. The method according to any one of the preceding claims, further comprising:
- comparing the at least one generated structure of the object with structures of objects in the dataset;
- assigning the at least one generated structure a similarity index based on the comparison.

6. The method according to any one of the preceding claims, further comprising:
- Subjecting the generated structure of the object to an evaluation test in which the response of the structure to environmental conditions and/or stress conditions is assessed in the form of evaluated physical parameter values;
- Comparing the assessed response to the at least one target physical parameter value;
Upon determining that at least one evaluated physical parameter value differs from a corresponding target physical parameter value by more than a predetermined amount:
- Fixing a target structural parameter value for the structure of the object;
- Implementing a construction of a new generated structure of the object that fulfills the at least one target physical parameter value based on the set comprising the at least one target parameter value and using the model.

7. The method according to any one of the preceding claims, further comprising:
- Subjecting the generated structure of the object to an evaluation test in which the response of the structure to environmental conditions and/or stress conditions is assessed in the form of evaluated physical parameter values;
- Comparing the assessed response to the target physical parameter values; Upon determining that at least one evaluated physical parameter value differs from a corresponding target physical parameter value by more than a predetermined amount:
- Selecting from among the constructed at least one generated structure another generated structure of the object;
- Subjecting the selected generated structure to the evaluation test.

8. The method according to any one of the preceding claims, further comprising:
- obtaining at least one fixed target structural parameter value for the structure of the object;
- constructing, based on the set of target parameter values, the fixed target structure parameter value and using the model, at least one generated structure of the object that fulfills the at least one target physical parameter value.

9. The method according to any one of the preceding claims, wherein obtaining the model further comprises:
- identifying, for each numerical description of the structure of an object, basic structural elements (21, 23, 26) within the structure of the object;
- determining, using machine learning, a relation between structural parameter values of basic structures and the physical parameter values of the structures.

10. The method according to claim 6, wherein basic structural elements are at least one among:
- a segment;
- a plane;
- a curve
- a surface;
- an arch;
- a circle;
- a disk;
- a point;
- a sphere;
- a ball;
- a spline;
- a profile.

11. The method according to any one of claims 6 or 7, wherein the model further comprises:
- identifying, for each numerical description of the structure of an object, interactions between basic structural elements within the structure of the object;
- determining, using machine learning, a relation between an arrangement of basic structures and the physical parameter values of the structures.

12. The method according to any one of the preceding claims, wherein the structures the numerical description of which are part of the dataset differ by at least one among: size, shape, topology, volume, mass, material composition, thickness, number of basic structural elements, values of physical parameters.

13. The method according to any one of the preceding claims, further comprising:
- obtaining additional data corresponding to additional numerical descriptions of structures of objects having known structural parameter values and physical parameter values;
- updating the model using the additional data.

14. Computer program product comprising instructions for executing a method (1) for generating a structure (6, 60) of an object with a computer aided design system wherein the generated structure of the object fulfills one or more target physical parameter values (1), the method comprising:
- Obtaining (101) a set comprising at least one target physical parameter value for the structure of the object;
- Obtaining (102) a model (4) trained using machine learning on a dataset (10) comprising data corresponding to numerical descriptions of a plurality of structures of objects having known structural parameter values and physical parameter values, the model establishing relations between the structural parameter values of the structures of the objects and the physical parameter values of the structures of the objects;
- Constructing (103), based on the set comprising at least one target parameter value and using the model, at least one generated structure of the object that fulfills the target physical parameter values.
